# EUROPÄISCHE PATENTSCHRIFT

(11) **EP 2 181 827 B1**
(45) Veröffentlichungstag und Bekanntmachung des Hinweises auf die Patenterteilung: **18.12.2019**
(21) Anmeldenummer: 09171050.9
(22) Anmeldetag: 23.09.2009
(51) Int. Cl.: B29C 44/00, B29C 44/42, B01F 5/06

(54) **Statischer Mischer**
Static mixer
Mélangeur statique

(30) Priorität: 17.10.2008 EP 08166921
(43) Veröffentlichungstag der Anmeldung: 05.05.2010
(73) Patentinhaber: Sulzer Mixpac AG, 9469 Haag (CH)
(72) Erfinder: Habibi-Naini, Sasan, Dr., 8486, Rikon (CH)
(74) Vertreter: Manitz Finsterwald Patent- und Rechtsanwaltspartnerschaft mbB

(56) Entgegenhaltungen:
- EP-A1- 1 312 409
- US-A- 3 983 196
- US-A1- 2004 008 576

## Beschreibung

Die Erfindung betrifft einen statischen Mischer aus Kunststoff umfassend einen Einbaukörper zum Einbau in ein rohrförmiges Mischergehäuse. Dieser Einbaukörper weist eine Längsachse auf, welche in Richtung eines den Einbaukörper einströmenden Fluids ausgerichtet ist, sodass durch den Einbaukörper ein Mischraum aufspannbar ist. Der Mischraum weist in einer Ebene normal zur Längsachse eine Strömungsquerschnittsfläche auf, welche im wesentlichen der Strömungsquerschnittsfläche des rohrförmigen Mischergehäuses entspricht. Der Einbaukörper umfasst ein Wandelement zur Teilung und/oder Umlenkung der Fluidströmung in eine von der Längsachse abweichende Richtung. Die Erfindung bezieht sich auch auf ein Verfahren zur Herstellung eines derartigen statischen Mischers.

Ein derartiger statischer Mischer ist beispielsweise aus der EP1426099 B1 bekannt. In diesem statischen Mischer werden zwei Komponenten in einem dreiteiligen Mischprozess, in dem die Masse zuerst geteilt, dann ausgebreitet und verdrängt wird, mittels einer Mehrzahl von gleichartigen Mischelementen miteinander vermischt. Abhängig von den physikalischen Eigenschaften der Komponenten muss dieser Mischprozess mehrmals vorgenommen werden. Aus diesem Grund sind in dem statischen Mischer eine Mehrzahl von Einbaukörpern gleicher Bauart hintereinander angeordnet. Diese Mischer werden insbesondere zur Vermischung von kleinen Mengen der Komponenten, das heisst wenige Milliliter bis ca. 1000 Milliliter verwendet. Demzufolge haben diese Mischer einen Mischraum mit einem Durchmesser von weniger als 10 mm bei einer Länge von über 50 mm. Dies hat zur Folge, dass die Wandstärken der Wandelemente dieses Mischers weniger als 1 mm betragen können, oft sogar weniger als 0,5 mm.

Mischer gemäss EP1426099 B1 aus Kunststoff werden vorzugsweise im Spritzgiessverfahren hergestellt. Die Herstellung eines Mischers von 30 mm Länge bei einer Wandstärke von kleiner 3 mm mit Hilfe des Spritzgiessverfahrens war bisher nicht möglich, da der Fliessweg vom Einspritzpunkt des Spritzgiesswerkzeugs bis zum gegenüberliegenden Ende des Mischers sehr hohe Werkzeuginnendrücke erfordert. Damit sichergestellt ist, dass auch die vom Einspritzpunkt am weitesten entfernten Wandelemente des Mischers im Spritzgiesswerkzeug vollständig mit Polymerschmelze gefüllt werden, mussten Werkzeuginnendrücke von über 1000 bar vorgesehen werden. Diesen hohen Werkzeuginnendrücken hielten bislang konventionelle Spritzgiesswerkzeuge nicht stand, wenn dünnwandige statische Mischer mit den angegebenen Abmessungen hergestellt werden mussten. Daher konnten bis zum heutigen Zeitpunkt insbesondere Mischer aus Kunststoff mit Wandstärken unter 3 mm und Verhältnissen von Mischerlänge/Wandstärke von mehr als 10 nicht wirtschaftlich im Spritzgiessverfahren hergestellt werden. Als weitere Problematik bei der Herstellung eines vorbekannten statischen Mischers mit einem Verhältnis von Mischerlänge/Wandstärke von mehr als 10 mittels Spritzgiessverfahren ist die Ausbildung von Einfallstellen anzusehen. Selbst bei Werkzeuginnendrücken von über 1000 bar ist es nicht ausgeschlossen, dass ein statischer Mischer mit einer Geometrie wie in EP1426099 B1 Einfallstellen aufweist.

Weiterer Stand der Technik ist in den Druckschriften US2004/008576, US3,983,196 und EP 1 312 409 A1 offenbart.

Aufgabe der Erfindung ist es, zum genannten statischen Mischer sowie zum genannten Verfahren eine Verbesserung zu schaffen, sodass ein statischer Mischer mit geringeren Wandstärken und grösserer Länge im Spritzgiessverfahren herstellbar ist.

Die Aufgabe der Erfindung wird mittels eines statischen Mischers nach Anspruch 1 gelöst. Für nicht kreisförmige rohrförmige Mischergehäuse entspricht der Durchmesser der Kantenlänge, wenn die Querschnittsfläche des rohrförmigen Mischergehäuses quadratisch ist. Für andere Formen der Mischergehäuse, mit beispielsweise rechteckigen oder ovalen Querschnitten, wird ein äquivalenter Durchmesser Dₐ unter der Annahme bestimmt, dass die Querschnittsfläche kreisförmig wäre, das heisst unter Verwendung der Formel Dₐ =2^{∗}(A/π)^{1/2}. Dₐ steht dann für den äquivalenten Durchmesser, A für die tatsächliche Querschnittsfläche. Das Verhältnis von Längenabmessung zu Durchmesser ist mindestens 1, wobei als Durchmesser entweder der Durchmesser des kreisförmigen Querschnitts oder der äquivalente Durchmesser für nicht-kreisförmige Querschnitte einzusetzen ist. Der Einbaukörper besteht zumindest teilweise aus geschäumtem Kunststoff. Ist ein einziger Einbaukörper vorgesehen, entspricht die Längenabmessung der Längsseite des Einbaukörpers. Ist eine Mehrzahl von Einbaukörpern hintereinander angeordnet, ergibt sich die Längenabmessung aus der Summe der Längsseiten. Das Verhältnis von Längenabmessung zu Durchmesser kann insbesondere grösser als 3, vorzugsweise grösser als 5, besonders bevorzugt grösser als 7 sein. Insbesondere können statische Mischer grosser Baulänge aufgrund des bedeutend geringeren Werkzeuginnendrucks wirtschaftlich hergestellt werden. Die geringeren Werkzeuginnendrücke sind darauf zurückzuführen, dass der eingesetzte Kunststoff als treibmittelhaltiges Polymer vorliegt, welcher im Verlauf des Spritzgiessverfahrens aufgeschäumt wird, sodass nach Beendigung des Spritzgiessverfahrens ein Einbaukörper vorliegt, der zumindest teilweise aus geschäumtem Kunststoff besteht. Für diesen Einbaukörper, der als statischer Mischer Verwendung findet, liegt das Verhältnis von Fliessweg zu Wandstärke bei mindestens 10. Das Verhältnis von Fliessweg zu Wandstärke kann insbesondere mehr als 50, bevorzugt mehr als 140, besonders bevorzugt mehr als 180 sein. Das treibmittelhaltige Polymer weist eine geringere Viskosität als ein vergleichbares Polymer ohne Treibmittel auf, da durch das Treibmittel, welches als physikalisches oder chemisches Treibmittel vorliegen kann, die Viskosität des Polymers herabgesetzt ist. Insbesondere kann eine Polymerschmelze eingesetzt werden, die ein physikalisches, insbesondere ein überkritisches Gas wie beispielsweise CO₂, oder chemisches Treibmittel enthält und als einphasige Lösung vorliegt. Der geschäumte Kunststoff weist Zellen mit einer Zellengrösse von weniger als 100 µm auf, wobei eine Zelldichte von grösser als mindestens ungefähr 10⁶ Zellen / cm³ vorgesehen sein kann. Zur Herstellung eines statischen Mischers aus geschäumtem Kunststoff wird fliessfähiges Material unter Druck in ein Spritzgiesswerkzeug eingebracht. Das Spritzgiesswerkzeug begrenzt einen Hohlraum, der die Form des statischen Mischers aufweist. Um eine Lösung von superkritischem Fluid im Polymer zu erhalten, die geschäumt ist, ist eine bestimmte Mischzeit erforderlich, die um so geringer ist, je dünnwandiger der statische Mischer ist. Zur Herstellung eines statischen Mischers werden in einem ersten Verfahrensschritt Kunststoffpellets in einem Extruder aufgeschmolzen. Danach wird Treibmittel, beispielsweise in der Form von überkritischem Gas, insbesondere CO₂, zugegeben. Einerseits kann das Treibmittel in einer ausgewählten Position der Plastifizierschnecke durch Betätigen eines geeigneten Durchflussregelventils zugegeben werden. Die Temperatur und der Druck des Treibmittels werden derart geregelt, dass das Treibmittel in seinen überkritischen Zustand übergeführt wird. Das Treibmittel kann auch vor dem Eintrag vorgeheizt werden, um eine plötzliche Drucksteigerung bei höherer Temperatur zu vermeiden. Alternativ dazu kann das Treibmittel ausserhalb des Plastifizierzylinders insbesondere als überkritisches Fluid zugegeben werden. Das Treibmittel wird anschliessend mit der Polymerschmelze im Plastifizierzylinder durch die Plastifizierschnecke gemischt. Dieser Mischvorgang erhöht die nachfolgende Diffusion des Treibmittels in das Polymer bis zur Sättigung von Treibmittel im Polymer. Die Kontaktfläche der beiden Materialien wird durch den Mischvorgang vergrössert und die erforderliche Eindringtiefe für den Diffusionsvorgang dementsprechend reduziert. Daher wird das Treibmittel durch die Bewegung der Plastifizierschnecke mit dem geschmolzenen Polymer vermischt, was dazu beiträgt, eine Lösung von Treibmittel im Polymer herzustellen. Solange die Plastifizerschnecke rotiert, erzeugt sie ein zweidimensionales Scherfeld in dem zu mischenden Treibmittel/Polymersystem. Hierbei werden die sich durch das Treibmittel bildenden Blasen in Scherrichtung gestreckt. Die gestreckten Blasen werden durch Perturbation der laminaren Strömung in kleinere sphärische Blasen zerteilt. Vorteilhafterweise weist die Plastifizierschnecke unregelmässig angeordnete Schneiden auf, sodass sich die Ausrichtung der Grenzfläche von Treibmittel/Polymer im Verhältnis der Strömungslinien ändert, wodurch sich die Effizienz der laminaren Vermischung erhöht. Während des Mischvorgangs, für welchen ein statischer Mischer verwendet werden kann, kommt es auch zu einer Diffusion der Blasen in die Polymerschmelze, welche jede der Blasen umgibt. Im Anschluss erfolgt die Umwandlung der zweiphasigen Mischung in eine einphasige Lösung erst in der Diffusionskammer. In der einphasigen Lösung ist die Treibmittelkonzentration im wesentlichen gleichförmig, sodass die Lösung als homogen angesehen werden kann. Im Anschluss an die Diffusion wird die Lösung schnell aufgeheizt, wodurch eine Nukleierung in der gesättigten Lösung erfolgt. Unter Nukleierung wird eine Keimbildung verstanden, welche die Grundlage für die Ausbildung des Schaums mit einer mittleren Zellgrösse von maximal 100 µm darstellt. Durch das Aufheizen wird durch die verringerte Löslichkeit des Treibmittels im Polymer bei dieser höheren Temperatur eine thermodynamische Instabilität erzeugt. Je stärker die Löslichkeit mit zunehmender Temperatur abnimmt, desto grösser ist die Nukleierungsrate und desto grösser ist die Zahl der nukleierten Zellen. Damit diese Zellen nicht bereits im Plastifizierzylinder wachsen, wird ein hoher Druck aufrecht erhalten. Die Lösung mit den nukleierten Zellen wird dann in einen Formhohlraum eines Spritzgiesswerkzeugs eingetragen. Im Spritzgiesswerkzeug wird der Druck kontrolliert, beispielsweise durch Einbringen von Druckluft. Erst wenn der Druck im Spritzgiesswerkzeug schnell abgesenkt wird, erfolgt durch die Druckinstabilität ein Zellwachstum im Spritzgiesswerkzeug. Dementsprechend ist der Fliesswiderstand bei Verwendung eines treibmittelhaltigen Polymers verringert. Hierdurch wird es erst möglich, den Werkzeuginnendruck derart abzusenken, dass die Druckbeanspruchung des Werkzeugs im zulässigen Bereich zu liegen kommt, in welchem mit einem vorzeitigen Versagen des Werkzeugs nicht mehr zu rechnen ist. Allerdings wurde bisher aus verschiedenen Gründen von dem Einsatz von treibmittelhaltigen Polymeren zur Herstellung derart langer, dünnwandiger statischer Mischer abgesehen. Zum einen ist nicht zu erwarten, dass durch die Absenkung der Einspritzgeschwindigkeit, die sich aufgrund der Absenkung des Werkzeuginnendrucks ergibt, ein derart dünnwandiger Mischer mit komplexer Geometrie überhaupt fertigen lässt. Aus dem Spritzgiessverfahren ist nämlich ein Phänomen bekannt, welches in Fachkreisen als Einfrieren bezeichnet wird. Hierbei kommt es zur Verfestigung der in das Spritzgiesswerkzeug eingespritzten Polymerschmelze in wandnahen Bereichen des Spritzgiesswerkzeugs. Diese Verfestigung kann durch Temperaturgradienten zwischen der Schmelze und der Wand bedingt sein, kann aber bei einem Werkzeug, welches die Temperatur der Polymerschmelze aufweist, ebenfalls auftreten, da die Fliessgeschwindigkeit der Polymerschmelze in wandnahen Bereichen des Spritzgiesswerkzeugs geringer als in mittleren Bereichen ist. Die Strömung einer Polymerschmelze durch ein Spritzgiesswerkzeug entspricht einer Strömung durch einen geschlossenen Kanal. Ein Strömungsprofil der Geschwindigkeit einer derartigen Strömung hat im wesentlichen parabelförmigen Verlauf. Die Symmetrieachse der Parabel entspricht im wesentlichen einer zentralen Längsachse des Kanals. An der Wand des Spritzgiesswerkzeugs hat die Strömungsgeschwindigkeit den Wert 0. Bedingt durch dieses Strömungsprofil hat das Polymer unterschiedliche Verweilzeit in dem durch das Spritzgiesswerkzeug ausgebildeten Kanal. In den Wandbereichen, in welchen die Strömungsgeschwindigkeit gering ist, ergibt sich demzufolge eine grössere Verweilzeit der Polymerschmelze, was zur Folge hat, dass es innerhalb der Polymerschmelze auch ohne Abkühlung zu Reaktionen kommen kann, beispielsweise zu Vernetzungsreaktionen. Hierdurch kommt es zum Einfrieren der Polymerschmelze in den Wandbereichen. Dies hat zur Folge, dass der für die Durchströmung der Polymerschmelze noch verfügbare Kanalquerschnitt verringert ist. Diese Verringerung des Kanalquerschnitts fällt bei Bauteilen mit einer Wandstärke von grösser als 3 mm kaum ins Gewicht, da das Einfrieren auf einen kleinen wandnahen Bereich des Kanals beschränkt bleibt, sodass die Polymerschmelze das Spritzgiesswerkzeug bei Bauteilen mit Wandstärken von über 3 mm im wesentlichen ungehindert durchströmen kann.

Jede der Querschnittsflächen weist eine Wandstärke auf, wobei das Verhältnis von Längenabmessung zu Wandstärke mindestens 40, vorzugsweise mindestens 50, besonders bevorzugt mindestens 75 beträgt. Eine Querschnittsfläche kann mehrere Wandelemente schneiden, sodass allein durch die Angabe der Querschnittsfläche die Wandstärke nicht eindeutig bestimmt sein muss. Für die Auslegung des Spritzgiesswerkzeugs ist aber die tatsächliche Wandstärke massgeblich. Je geringer diese Wandstärke ist, desto stärker machen sich die früher beschriebenen Wandeffekte beim Einspritzen der Polymerschmelze in das Spritzgiesswerkzeug bemerkbar. Hieraus folgt, dass für kleine Wandstärken ein vergleichsweise höherer Werkzeuginnendruck vorzusehen ist. Die Wandstärke des statischen Mischers kann kleiner als 3 mm, vorzugsweise kleiner als 2 mm, besonders bevorzugt kleiner als 1,5 mm betragen, ohne dass der zulässige Werkzeuginnendruck überschritten wird.

Insbesondere können eine Mehrzahl von Einbaukörpern hintereinander entlang der Längsachse angeordnet sein. Diese Einbaukörper können entweder gleiche Bauweise aufweisen oder Einbaukörper unterschiedlicher Bauweise können miteinander kombiniert werden, sodass eine Mischeranordnung, wie sie beispielsweise in der EP1312409 B1 gezeigt ist, entsteht. Vorteilhafterweise sind benachbarte Einbaukörper miteinander verbunden, sodass der Mischer, der aus dieser Mehrzahl von Einbaukörpern besteht, als ein monolithisches Teil ausgebildet ist. Das heisst, der Mischer wird in seiner Gesamtheit in einem einzigen Spritzgiesswerkzeug hergestellt.

Der Einbaukörper oder die Gesamtheit der Einbaukörper können eine Längenabmessung zwischen 5 und 500 mm, vorzugsweise zwischen 5 und 300 mm, bevorzugt zwischen 50 und 100 mm aufweisen.

Der statische Mischer ist vorteilhafterweise derart ausgestaltet, dass der Einbaukörper eine Längsachse aufweist, welche in Richtung eines den Einbaukörper einströmenden Fluids ausgerichtet ist, sodass durch den Einbaukörper ein Mischraum aufspannbar ist, wobei der Mischraum in einer Ebene normal zur Längsachse eine Strömungsquerschnittsfläche aufweist, welche im wesentlichen der Strömungsquerschnittsfläche des rohrförmigen Mischergehäuses entspricht. Der Einbaukörper umfasst ein Wandelement zur Teilung und/oder Umlenkung der Fluidströmung in eine von der Längsachse abweichende Richtung, wobei durch einen Schnitt des Wandelements mit der Ebene eine Querschnittsfläche erzeugbar ist, dass durch einen Schnitt des Wandelements mit der Ebene eine Querschnittsfläche erzeugbar ist, und diese Querschnittsfläche maximal 1/5, vorzugsweise maximal 1/10 besonders bevorzugt maximal 1/20 der Strömungsquerschnittsfläche des Mischraums beträgt. Der Einbaukörper besteht zumindest teilweise aus geschäumtem Kunststoff. Bei Verwendung eines geschäumten Kunststoffes hat sich überraschenderweise gezeigt, dass derselbe Fliessweg mit wesentlich geringeren Werkzeuginnendrücken erreicht werden kann. Demzufolge ermöglicht es die Verwendung von geschäumtem Kunststoff, den Fliessweg im Vergleich zum Stand der Technik zu verlängern, sodass Mischer mit einer grösseren Längsabmessung herstellbar sind.

Die Querschnittsfläche des Wandelements bildet nach einem ersten Ausführungsbeispiel eine erste Breitseite, durch welche der Mischraum in zwei Teilbereiche unterteilbar ist. Der Strom des Mischguts, einer fluiden Masse wird somit in zwei Teilströme unterteilt, die je nach Lage der Breitseite in dem Mischraum gleiche oder unterschiedliche Grösse aufweisen können. Selbstverständlich können auch mehr als zwei Breitseiten ausgebildet sein, sodass entsprechend mehr als zwei Teilströme entstehen. Durch die komplexe Geometrie des statischen Mischers ergeben sich häufige Veränderungen des von der treibmittelhaltigen Polymerschmelze zu durchströmenden Querschnitts des Spritzgiesswerkzeugs. Diese Veränderungen sind bedingt durch die Geometrie und Anordnung der Wandelemente, welche die Einbaukörper des statischen Mischers ausbilden und für welche im Spritzgiesswerkzeug entsprechende Hohlräume und Kanäle vorgesehen werden müssen. Die Regelung des Drucks im Spritzgiesswerkzeug erfolgt in diesem besonderen Fall dergestalt, dass zu Beginn des Einspritzvorgangs ein Werkzeuginnendruck vorgesehen ist, bei welchem die treibmittelhaltige Polymerschmelze noch als einphasige Lösung vorliegt und dieser Druck während der Füllung des Formhohlraums des Spritzgiesswerkzeugs für den statischen Mischer abgesenkt wird. Die Absenkung des Drucks erfolgt derart, dass es während des Einspritzens zur Ausbildung eines Schaums, insbesondere eines Schaums mit Zelldurchmessern von kleiner 100 µm und / oder einer Zelldichte von grösser als mindestens ungefähr 10⁶ Zellen / cm³ kommt. Da sich der Schaum bereits während des Einspritzens bildet, erniedrigt sich die Viskosität der Polymerschmelze, da die entstehenden Zellen im zweiphasigen Zustand als Bläschen ausgebildet sind, die komprimierbares Gas enthalten. Diese erniedrigte Viskosität ermöglicht es demzufolge, die Einspritzgeschwindigkeit gegenüber herkömmlichen Spritzgiessverfahren für ungeschäumter Bauteile bei wesentlich niedrigerem Werkzeuginnendruck zu verringern. Durch die niedrigere Viskosität kommt es ebenfalls zu einer Veränderung der Wandeffekte, insbesondere in Bereichen, in welchen die Polymerschmelze umgelenkt wird. Es ist bekannt, dass für einfache Geometrien mit im wesentlichen rechteckigen Querschnitten Bereiche, die sich nahe der Wand des Spritzgiesswerkzeugs weniger oder nicht geschäumt werden. Ist ein statischer Mischer insbesondere aus Einbaukörpern nach einer der nachfolgend genauer beschriebenen Geometrien aufgebaut, ergeben sich im Strömungsweg der Polymerschmelze an jeder Kante des Wandelements und dem Übergang zu einem nachfolgenden Wandelement starke Umlenkungen der Strömung, sodass Polymerschmelze, die im ersten Wandelement in einem Randbereich der Öffnung des Spritzgiesswerkzeugs gelegen ist, im nachfolgenden, zweiten Wandelement in einen Zentralbereich dieses zweiten Wandbereichs fliesst und es zur Ausbildung eines zweiphasigen Schaums kommt. Daher kommt es durch eine Anordnung benachbarter Wandelemente in einem Winkel zueinander, insbesondere einer kreuzweisen Anordnung benachbarter Wandelemente, zu einer Schaumbildung entlang der gesamten Längsabmessung des Mischers, wenn der Einspritzdruck wie oben abgesenkt wird.

Das Wandelement weist nach einem zweiten Ausführungsbeispiel eine im wesentlichen rechteckige Form auf und eine der ersten Breitseite gegenüberliegende zweite Breitseite, die nach einem bevorzugten Ausführungsbeispiel relativ zur ersten Breitseite um einen Winkel verdreht ist, sodass eine sprialförmige Struktur ausgebildet wird.

Nach einem dritten, vorteilhaften Ausführungsbeispiel umfasst das Wandelement ein Stegelement, dessen erste Breitseite eine strömungsteilende Kante ausbildet und dessen zweite Breitseite an ein Umlenkelement angrenzt, welches zur Umlenkung der Strömung von einem ersten Teilbereich des Mischraums in einen zweiten Teilbereich des Mischraums dient. Die von der ersten und zweiten Breitseite, sowie von Längsseiten begrenzte Oberfläche des Wandelements ist im wesentlichen in Richtung der Längsachse ausgerichtet und die Oberfläche des Umlenkelements liegt im wesentlichen in einer Querebene, die insbesondere in einem Winkel von 45° bis zu 90°, vorzugsweise von 60°bis zu 90° besonders bevorzugt von 75° bis zu 90° zur Längsachse ausgerichtet ist.

Nach einem vierten, besonders bevorzugten Ausführungsbeispiel eines Mischers, der bei hoher Mischleistung geringe Toträume und einen verringerten Druckabfall aufweist, umfasst der Einbaukörper eine Mehrzahl von Wandelementen, wobei jedes Wandelement einen im wesentlichen rechteckigen Querschnitt aufweist, umfassend eine erste Breitseite, eine zweite Breitseite, sowie eine erste und eine zweite Längsseite.

Das Wandelement ist derart in dem Einbaukörper angeordnet, dass die Längsseiten sich im wesentlichen in Richtung der Längsachse erstrecken und die erste Breitseite und zweite Breitseite quer zur Richtung der Längsachse verlaufen. Der Einbaukörper umfasst ein erstes Wandelement, das den Mischraum in zwei Teile unterteilt. An das erste Wandelement schliessen zumindest zwei Wandelemente an, die sich mit dem ersten Wandelement kreuzen. Das erste Wandelement ist vorteilhafterweise mit dem zweiten Wandelement und dem dritten Wandelement über zumindest ein Übergangselement verbunden.

Mittels des Übergangselements wird die Strömung des Mischguts umgelenkt, sodass die Komponenten, die als Stränge in den statischen Mischer eintreten, während ihres Wegs durch den statischen Mischer fortwährend in Streifen von sich verringernder Breite unterteilt werden, wodurch sich auch schwer mischbare oder hochviskose Komponenten mit diesem statischen Mischer verarbeiten lassen.

Benachbarte Einbaukörper sind vorteilhafterweise über zumindest ein Verbindungselement miteinander verbunden. Durch dieses Verbindungselement wird die Konstruktion des statischen Mischers steifer, sodass eine Krümmung des Mischers relativ zu seiner Längsachse weniger leicht erfolgen kann und der Mischer in ein den Mischraum umgebendes Rohr eingepasst werden kann.

Die Einbaukörper gemäss der vorher beschriebenen Ausführungsbeispiele sind beliebig miteinander kombinierbar.

Die vorgängig beschriebenen statischen Mischer eignen sich als Einwegmischer, da ihre Herstellungs- und Materialkosten gering sind, sobald das entsprechende Spritzgiesswerkzeug hergestellt ist. Des weiteren kommen die statischen Mischer in Dosier- und/oder Mischgeräten zum Einsatz. Als Beispiel sei insbesondere eine Mehrkomponentenkartusche genannt, die eine Austragsvorrichtung und ein an die Austragsvorrichtung gekoppeltes Rohr umfasst, welches einen statischen Mischer gemäss eines der vorhergehenden Ausführungsbeispiele enthält.

Der statische Mischer kann an ein Austraggerät oder eine Austragkartusche, insbesondere eine Mehrkomponentenkartusche angebracht werden. Der statische Mischer kann Verwendung zur Mischung eines aushärtenden Mischguts aus fliessfähigen Komponenten finden. Eine weitere mögliche Verwendung des statischen Mischers ist die Mischung von Abformmassen im Dentalbereich oder die Mischung von Mehrkomponentenklebstoffen.

Nachfolgend wird die Erfindung anhand der Zeichnungen erläutert. Es zeigen:
- Fig. 1: ein erstes Ausführungsbeispiel eines erfindungsgemässen Mischers
- Fig. 2: ein zweites Ausführungsbeispiel eines erfindungsgemässen Mischers
- Fig. 3: ein drittes Ausführungsbeispiel eines erfindungsgemässen Mischers
- Fig. 4: ein viertes Ausführungsbeispiel eines erfindungsgemässen Mischers

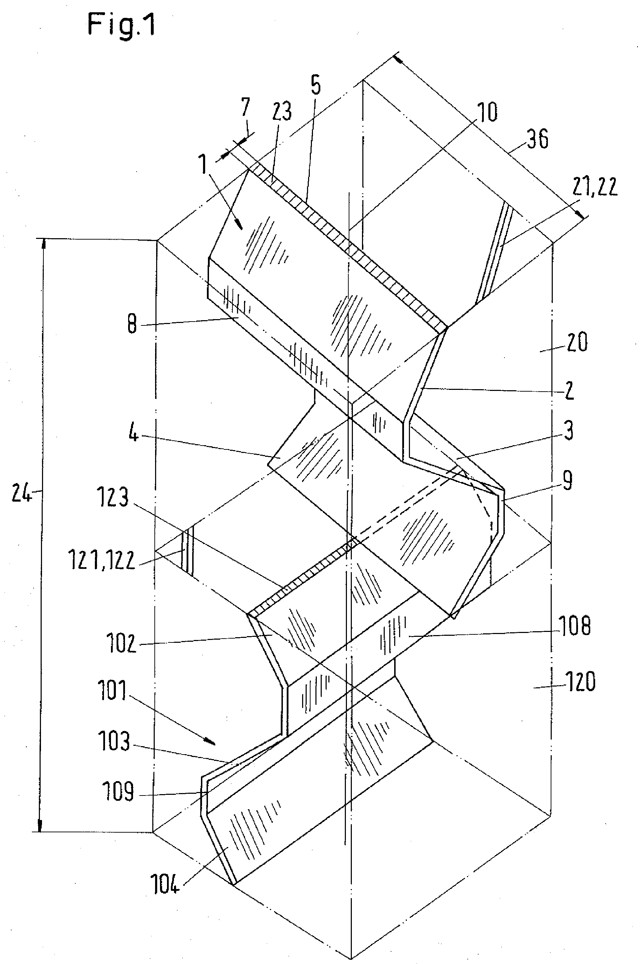

In Fig. 1 ist ein erstes Ausführungsbeispiel des erfindungsgemässen statischen Mischers dargestellt. Der statische Mischer umfasst einen Einbaukörper 1, der in ein rohrförmiges Gehäuse, welches nicht dargestellt ist, eingebaut ist. Das rohrförmige Gehäuse dient als Begrenzung eines Mischraums 20, der sich im Inneren des rohrförmigen Gehäuses befindet. Durch den Mischraum 20 strömt ein zu mischendes Fluid, welches in der Regel aus zumindest zwei verschiedenen Komponenten besteht. In den meisten Fällen liegen die Komponenten in flüssigem Zustand oder als zähflüssige Massen vor. Hierzu zählen beispielsweise Pasten, Klebstoffe, aber auch Fluide, welche Einsatz im medizinischen Bereich finden, welche pharmazeutische Wirkstoffe enthalten, oder Fluide für kosmetische Anwendungen, sowie Lebensmittel. Insbesondere finden derartige statische Mischer auch Verwendung als Einwegmischer zur Mischung eines aushärtenden Mischguts aus fliessfähigen Komponenten, wie beispielsweise die Mischung von Mehrkomponentenklebstoffen. Eine andere bevorzugte Verwendung liegt in der Mischung von Abformmassen im Dentalbereich.

Der Einbaukörper 1 selbst weist keine beweglichen Teile auf, sodass der Mischvorgang durch das strömende Fluid selbst erfolgt. Das Fehlen beweglicher Einbauten ist als der Hauptgrund für die Bezeichnung eines derartigen Mischers als statischer Mischer anzusehen. Der Einbaukörper 1 hat eine Längsachse 10, welche gleichzeitig die Längsachse des rohrförmigen Gehäuses ist. Die Längsachse 10 liegt in Hauptströmungsrichtung, das heisst in Richtung der Strömung, welche in einem rohrförmigen Gehäuse ohne jegliche Einbauten oder Krümmer vorliegt. Des weiteren weist der Einbaukörper einen Durchmesser 36 auf. Legt man eine Ebene (21,121) normal zu dieser Längsachse an einer beliebigen Stelle durch den Mischraum (20,120) ergibt sich eine Strömungsquerschnittsfläche (22,122), die im wesentlichen der Strömungsquerschnittsfläche des rohrförmigen Mischergehäuses ohne Einbauten entspricht. Hierbei ist zu beachten, dass der Einbaukörper 1 durch die Ebene (21, 121) geschnitten wird, wodurch sich eine Querschnittsfläche (23, 123) ergibt.

Der Wert für die Strömungsquerschnittsfläche (22, 122) ist daher im Bereich des Wandelements geringer als der Wert für die Strömungsquerschnittsfläche des rohrförmigen Mischergehäuses. Die Querschnittsfläche beträgt maximal 1/5 der Strömungsquerschnittsfläche (22, 122). Bei der Auslegung der Wandelemente wird angestrebt, sie möglichst dünnwandig auszugestalten, dass der Materialbedarf an Polymer zur Herstellung des Einbaukörpers möglichst reduziert ist. Der Anteil der Querschnittsfläche von 1/5 der Strömungsquerschnittsfläche ist für Fluide erforderlich, die mit hohem Druck durch den Mischer gefördert werden müssen, wie beispielsweise zähflüssige Fluide oder Pasten. In diesem Fall ist eine gewisse mechanische Stabilität des Mischers erforderlich. Für Fluide niederer Viskosität oder kürzere Mischer kann der Anteil auf 1/10 oder weniger oder sogar auf 1/20 oder weniger reduziert werden.

Für Einbaukörper 1, welche über zumindest eine Symmetrieebene verfügen, die den Mischraum in zwei gleiche Teile teilt, liegt die Längsachse in dieser Symmetrieebene. Der Einbaukörper 1 enthält zumindest ein Wandelement (2,3,4,8,9) welches einer Teilung und/oder Umlenkung der Fluidströmung in eine von der Längsachse abweichende Richtung dient. Das Fluid strömt in der Regel beidseitig des Wandelements.

Das Wandelement 2 weist eine erste Breitseite 5 auf, welche sich im wesentlichen über die Breite oder den Durchmesser des Mischraums erstreckt, das heisst in der Regel bis zur Wand des rohrförmigen Gehäuses reicht. Das Wandelement 2 weist eine zweite Breitseite 6 auf, welche stromabwärts der ersten Breitseite 5 angeordnet ist. Gemäss Fig. 1 schliesst an die zweite Breitseite 6 ein zweites Wandelement 8 an, auf welches ein drittes Wandelement 3 folgt. An das dritte Wandelement 3 ist stromabwärts ein viertes Wandelement 9 angeordnet, an welches wiederum ein fünftes Wandelement 4 anschliesst. Das Wandelement 2 weist einen Neigungswinkel zur Längsachse 10 auf, sodass es zur Umlenkung der beiden durch die erste Breitseite 5 gebildeten Teilströme kommt.

Gemäss einer einfacheren Variante, welche nicht zeichnerisch dargestellt ist, kann an das erste Wandelement 2 ein Wandelement 102 eines benachbarten Einbaukörpers 101 anschliessen. Benachbarte Einbaukörper (1,101) sind vorzugsweise verdreht zu einander angeordnet, insbesondere um einen Winkel von 90° zueinander verdreht angeordnet. Die Einbaukörper (1, 101) gemäss Fig. 1 umfassen somit eine Folge von abwechselnd in einem Winkel zur Längsachse 10 angeordneten Wandelementen (2, 3, 4, 102, 103, 104) sowie Zwischenstücke (8, 9 108, 109), welche parallel zur Längsachse ausgerichtet sind. Der Einbaukörper 101 ist gegenüber Einbaukörper 1 um 180° verdreht.

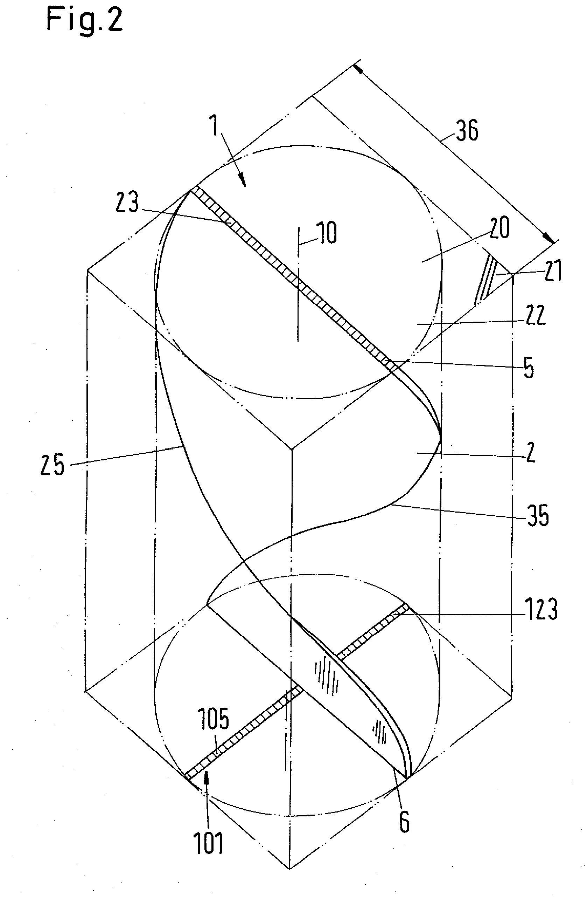

In Fig. 2 ist ein Einbaukörper 1 für einen statischen Mischer eines zweiten Ausführungsbeispiels gezeigt. Der Einbaukörper dient zum Einbau in ein rohrförmiges Gehäuse, welches in diesem Fall wahlweise mit rechteckiger oder rautenförmiger Strömungsquerschnittsfläche oder auch mit kreisförmiger oder elliptischer Querschnittsfläche ausgebildet sein kann. Dieser Einbaukörper 1 besteht aus einem einzigen Wandelement 2, welches als ein plattenförmiges Element mit rechteckiger Oberfläche und einer Querschnittsfläche 23, welche der Wandstärke 7 entspricht, ausgebildet ist. Die Querschnittsfläche 23 ergibt sich als Schnittfläche des plattenförmigen Elements mit einer Ebene 21, welche normal auf die Längsachse 10 steht, welche der Symmetrieachse des plattenförmigen Elements in Hauptströmungsrichtung entspricht.

Als Hauptströmungsrichtung soll wiederum die Strömung des Fluids durch den Mischraum ohne strömungsumlenkende Einbauten, wie Einbaukörper, definiert sein. Das plattenförmige Element weist eine erste Breitseite 5 sowie eine zweite Breitseite 6 auf, sowie zwei die beiden Breitseiten verbindende Längsseiten (25, 35). Die erste und zweite Breitseite teilen den durch das Wandelement 2 aufgespannten Mischraum 20 in zwei Teile, in dem Fall von Fig. 2 in zwei Hälften. Damit die Strömung des Fluids entlang des Wandelements 2 umgelenkt werden kann, wird die erste Breitseite 5 relativ zur zweiten Breitseite 6 um die Längsachse 10 verdrillt, sodass die beiden Längsseiten (25, 35) je eine schraubenförmige Linie bzw. die Oberflächen eine sprialförmige Struktur ausbilden. Bei dem in der Fig. 2 dargestellten Wandelement ist die erste Breitseite 5 gegenüber der zweiten Breitseite 6 um 180° gedreht. Die Längsseiten 25, 35 berühren bevorzugt das sie umgebende rohrförmige Gehäuse oder sind in allenfalls geringem Abstand zu dem rohrförmigen Gehäuse angeordnet, sodass vermieden wird, dass Teilströme des Fluids entlang der Innenwand des rohrförmigen Gehäuses ungehindert entlang strömen und vom Mischvorgang ausgeschlossen bleiben. An den Einbaukörper 1 kann wiederum mindestens ein weiterer Einbaukörper 101 anschliessen, von welchem ausschliesslich die Querschnittsfläche 123 angedeutet ist. Die erste Breitseite 105 der Querschnittsfläche 123 ist in einem Winkel zur zweiten Breitseite des Einbaukörpers 1 angeordnet. In der Darstellung der Fig. 2 beträgt der Winkel 90°, gemessen in der Strömungsquerschnittsfläche 122.

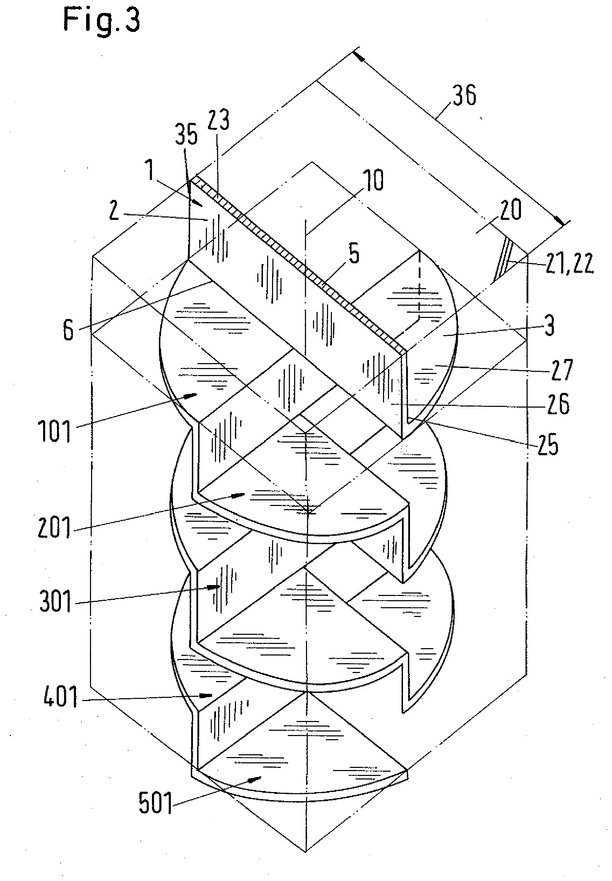

Fig. 3 zeigt ein weiteres Ausführungsbeispiel statischen Mischers umfassend eine Mehrzahl von Einbaukörpern (1, 101, 201, 301, 401, 501) zum Einbau in ein rohrförmiges Gehäuse. Ein erster Einbaukörper 1 besteht aus einem plattenförmigen Wandelement 2 mit rechteckigem Querschnitt, welcher eine erste Breitseite 5, eine zweite Breitseite 6, eine erste Längsseite 25, sowie eine zweite Längsseite 35 umfasst. Die erste Breitseite 5 liegt in der Ebene 21, welche eine Strömungsquerschnittsfläche 22 darstellt, die normal zur Hauptströmungsrichtung, wie in Zusammenhang mit Fig. 1 definiert wurde, liegt. Die beiden Längsseiten 25, 35 berühren auch in diesem Fall das nicht dargestellte rohrförmige Gehäuse oder weisen einen allenfalls geringen Abstand zu dem rohrförmigen Gehäuse auf.

Das Wandelement 2 hat die Funktion eines Stegelements 26, welches die Strömung in zwei Teile teilt, dessen Umlenkung mit Ausnahme der Umlenkung an den Kanten der ersten Breitseite 5 vernachlässigbar ist. Aus diesem Grund schliesst an das Stegelement 26 stromabwärts desselben ein Umlenkelement 27 an. Das Umlenkelement 27 liegt bevorzugt in einer Ebene, die parallel zur Ebene 21 ausgerichtet ist oder mit einem Neigungswinkel zu der Ebene angeordnet ist, wobei der Neigungswinkel nicht mehr als 60°, vorzugsweise nicht mehr als 45°, besonders bevorzugt nicht mehr als 30° beträgt. Je geringer der Neigungswinkel zwischen der Oberfläche des Umlenkelements 27 und der Ebene 21, desto geringer ist die benötigte Baulänge, aber desto stärker nimmt der Druckverlust zu. Oder anders ausgedrückt: die Oberfläche des Umlenkelements liegt im wesentlichen in einer Querebene, die in einem Winkel von 45° bis zu 90°, vorzugsweise von 60°bis zu 90° besonders bevorzugt von 75° bis zu 90° zur Längsachse ausgerichtet ist. Das Umlenkelement 27 kann auch in Übereinstimmung mit Fig. 1 als Wandelement 3 aufgefasst werden, im Unterschied zu dem Wandelement der Fig. 1 wird der Mischraum 20 jedoch in 4 Teilräume unterteilt. Durch das Umlenkelement wird der durchströmte Querschnitt lokal auf zwei der 4 Teilräume reduziert. Gemäss Fig. 3 ist jeder dieser Teilräume ein Kreissektor, mit einem Öffnungswinkel von 90°, wenn die Strömungsquerschnittsfläche kreisförmig ist. Alternativ dazu könnte jeder der Teilräume auch quadratischen Querschnitt aufweisen, wenn das Umlenkelement ebenfalls für ein Mischergehäuse mit quadratischem Querschnitt ausgelegt ist. In diesem Fall wäre anstatt der dargestellten Krümmung des Umlenkelements entsprechend ein viereckiges Umlenkelement mit Kanten, die an die nicht dargestellten Innenwände des rohrförmigen Gehäuses angrenzen, vorzusehen.

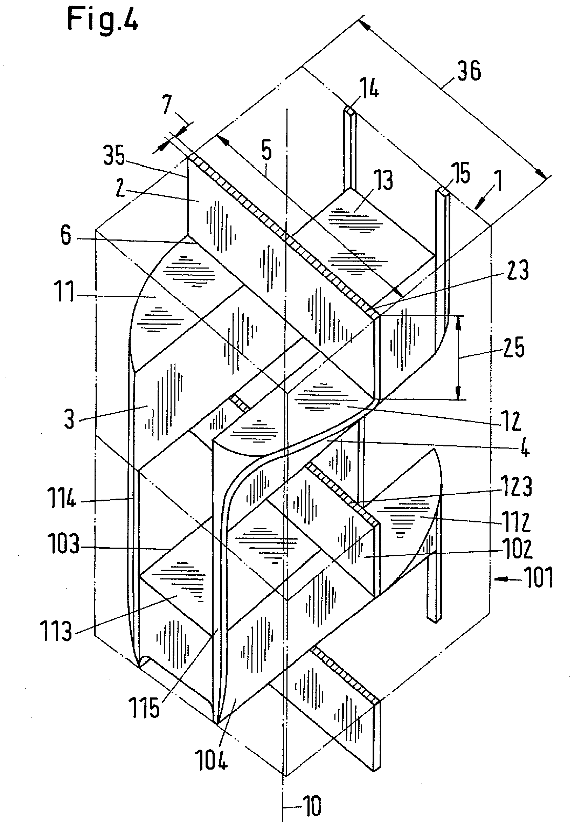

In Fig. 4 ist ein weiteres Ausführungsbeispiel eines statischen Mischers dargestellt, in welchem die Fluidströmung abschnittsweise in mehr als zwei Teilströme unterteilbar ist. Der statische Mischer aus Kunststoff gemäss Fig. 4 umfasst einen Einbaukörper 1 zum Einbau in ein rohrförmiges Mischergehäuse, wobei der Einbaukörper (1, 101) eine Längsachse 10 aufweist, welche in Richtung eines den Einbaukörper (1,101) einströmenden Fluids ausgerichtet ist, sodass durch den Einbaukörper (1,101) ein Mischraum (20, 120) aufspannbar ist, wobei der Mischraum (20, 120) in einer Ebene (21,121) normal zur Längsachse 10 eine Strömungsquerschnittsfläche (22,122) aufweist, welcher im wesentlichen der Strömungsquerschnittsfläche des rohrförmigen Mischergehäuses entspricht, wobei der Einbaukörper (1, 101) ein Wandelement (2, 3, 4, 102, 103,104) zur Teilung und/oder Umlenkung der Fluidströmung in eine von der Längsachse abweichende Richtung umfasst. Durch einen Schnitt des Wandelements (2, 3, 4, 102, 103, 104) ist mit der Ebene (21,121) eine Querschnittsfläche (23,123) erzeugbar, und diese Querschnittsfläche (23,123), maximal 1/5 vorzugsweise maximal 1/10 besonders bevorzugt maximal 1/20 der Strömungsquerschnittsfläche (22,122) des Mischraums (20, 120) beträgt. Der Einbaukörper 1 umfasst eine Mehrzahl von Wandelementen (2,3,4), wobei jedes Wandelement (2,3,4) einen im wesentlichen rechteckigen Querschnitt aufweist, umfassend eine erste Breitseite 5, eine zweite Breitseite 6 sowie eine erste und eine zweite Längsseite (25,35). Jedes der Wandelemente ist (2,3,4) derart in dem Einbaukörper 1 angeordnet, dass die Längsseiten (25, 35) sich im wesentlichen in Richtung der Längsachse 10 erstrecken und die erste Breitseite 5 und zweite Breitseite 6 quer zur Richtung der Längsachse verlaufen. Der Einbaukörper umfasst ein erstes Wandelement 2, das den Mischraum in zwei Teile unterteilt. An das erste Wandelement 2 schliessen zumindest zwei Wandelemente (3,4) an, die sich mit dem ersten Wandelement (2) kreuzen. Der Kreuzungswinkel beträgt in dem Ausführungsbeispiel gemäss Fig. 4 90°, kann aber hiervon abweichende Werte annehmen. Gemäss Fig. 4 ist das erste Wandelement 2 mit dem zweiten Wandelement 3 und dem dritten Wandelement 4 über zumindest ein Übergangselement (11,12,13, 111,112,113) verbunden. Das Übergangselement kann wie schon in Fig. 3 gezeigt, als Umlenkelement ausgestaltet sein, um die Fluidströmung von einem Teilbereich der Strömungsquerschnittsfläche in einen anderen Teilbereich umzulenken.

Benachbarte Einbaukörper (1, 101) können über zumindest ein Verbindungselement (14, 15, 114, 115) miteinander verbunden sein. Ein derartiges Verbindungselement erhöht die Biegesteifigkeit des statischen Mischers. Des weiteren ist über das Verbindungselement im Spritzgiessverfahren gewährleistet, dass die Polymerschmelze vom ersten Einbaukörper 1 zu dem ersten (und allfälligen weiteren stromabwärts angeordneten) Einbaukörpern 101 fliessen kann. Wären die Verbindungselemente nicht vorhanden, bestünde nämlich der Übergang vom Wandelement 3 bzw. 4 zu dem stromabwärts gelegenen Wandelement 102 nämlich ausschliesslich in der gemeinsamen Schnittfläche, welche in diesem Fall aus zwei Quadraten besteht, die eine Seitenlänge, die der Wandstärke 7 entspricht, aufweisen würden. Die gesamte Polymerschmelze für die stromabwärts gelegenen Einbaukörper müsste diese Drosselstellen passieren, was zu lokalen Druckspitzen im Werkzeug führen würde. Zudem würde sich in den Bereichen der Wandelemente, die im Einsatz nahe an dem rohrförmigen Gehäuse zu liegen kommen würden, eine lange Verweilzeit der Polymerschmelze ergeben, was zu Veränderungen der Polymerschmelze und unter Umständen zu einer Verschlechterung der physikalischen Eigenschaften und Inhomogenität führen würde. Insbesondere bei Verwendung einer treibmittelhaltigen Schmelze zum Erzeugen einer geschäumten Struktur würden solche Toträume für das Spritzgiessverfahren nachteilig sein.

Analog wie in Fig. 4 gezeigt, können auch im Ausführungsbeispiel gemäss Fig. 1 oder 2 Verbindungselemente vorgesehen sein, die aber zur Vereinfachung der Darstellung in den Fig. 1 und 2 weggelassen wurden. Die Übergangselemente 27 der Fig. 3 erfüllen ebenfalls die Funktion von Verbindungselementen.

Benachbarte Einbaukörper (1, 101) sind gemäss Fig. 4 in einem Winkel von 180° um die Längsachse 10 gedreht. Die Einbaukörper gemäss einem der vorhergehenden Ausführungsbeispiele sind beliebig miteinander kombinierbar. Insbesondere können auch zusätzliche Verbindungselemente vorgesehen werden, um Einbaukörper verschiedener Ausführungsbeispiele zur Verbesserung der Mischwirkung miteinander zu einer Hybridstruktur zu kombinieren.

Der statische Mischer gemäss jedes der vorherigen Ausführungsbeispiele ist aus Kunststoff gefertigt, mittels welchem sich im Spritzgiessverfahren selbst vergleichsweise komplizierte Geometrien realisieren lassen. Insbesondere für statische Mischer umfassend eine Mehrzahl von Einbaukörpern, weist die Gesamtheit der Einbaukörper (1, 101, 201, 301...) eine Längenabmessung 24 auf und jede der Querschnittsflächen (23, 123) eine Wandstärke 7. Das Verhältnis von Längenabmessung 24 zu Wandstärke 7 beträgt mindestens 40, vorzugsweise mindestens 50, besonders bevorzugt mindestens 75. Für die bevorzugte Verwendung von statischen Mischern für kleine Fluidmengen ist die Wandstärke 7 kleiner als 3 mm, vorzugsweise kleiner als 2 mm, besonders bevorzugt kleiner als 1,5 mm. Die Gesamtheit der Einbaukörper (1,101) weist eine Längenabmessung 24 zwischen 5 und 500 mm, vorzugsweise zwischen 5 und 300 mm, bevorzugt zwischen 50 und 100 mm auf.

Experimentell konnten statische Mischer gemäss des vierten Ausführungsbeispiels mit einer Längsabmessung von 60 mm und einer mittleren Wandstärke von 0.42 mm in geschäumter Bauweise hergestellt werden. Dementsprechend beträgt das Verhältnis von Fliessweg zu Wandstärke 143:1. Ein derartiger Mischer besteht aus 12 Einbaukörpern.

Des weiteren konnte ein Mischer gemäss des dritten Ausführungsbeispiels mit einer Längsabmessung von 100 mm und einer mittleren Wandstärke von 0.42 mm in geschäumter Bauweise hergestellt werden. Dementsprechend beträgt das Verhältnis von Fliessweg zu Wandstärke 238:1. Dieser Mischer besteht aus 24 Einbaukörpern.

## Patentansprüche

1. Statischer Mischer mit einer Mehrzahl von Einbaukörpern (1,101) die hintereinander entlang einer Längsachse des statischen Mischers angeordnet sind, wobei jeder Einbaukörper (1,101) zum Einbau in ein rohrförmiges Mischergehäuse ausgebildet ist, wobei jeder Einbaukörper (1,101) eine Längenabmessung (24), einen Durchmesser (36) und eine Wandstärke (7) aufweist, **dadurch gekennzeichnet, dass** das Verhältnis von Längenabmessung (24) zu Durchmesser mindestens 1 beträgt, wobei das Verhältnis von Längenabmessung (24) zu Wandstärke (7) mindestens 10 beträgt, wobei der Einbaukörper (1,101) zumindest teilweise aus geschäumtem Kunststoff besteht, wobei ein Verhältnis von Fliessweg zu der Wandstärke des Einbaukörpers (1, 101) von zumindest 10 vorliegt.

2. Statischer Mischer nach Anspruch 1, wobei der Einbaukörper (1, 101) eine Längsachse (10) aufweist, welche in Richtung eines den Einbaukörper (1,101) einströmenden Fluids ausgerichtet ist, sodass durch den Einbaukörper (1,101) ein Mischraum (20, 120) aufspannbar ist, wobei der Mischraum (20, 120) in einer Ebene (21,121) normal zur Längsachse (10) eine Strömungsquerschnittsfläche (22,122) aufweist, welcher im wesentlichen der Strömungsquerschnittsfläche des rohrförmigen Mischergehäuses entspricht, wobei der Einbaukörper (1, 101) ein Wandelement (2, 3, 4, 8, 9, 102, 103, 104, 108, 109) zur Teilung und/oder Umlenkung der Fluidströmung in eine von der Längsachse abweichende Richtung umfasst, wobei durch einen Schnitt des Wandelements (2, 3, 4, 8, 9, 102, 103, 104, 108, 109) mit der Ebene (21,121) eine Querschnittsfläche (23,123) erzeugbar ist, und diese Querschnittsfläche (23,123), maximal 1/5 der Strömungsquerschnittsfläche (22,122) des Mischraums (20, 120) beträgt.

3. Statischer Mischer nach Anspruch 2, wobei die Querschnittsfläche (23, 123) des Wandelements (2, 3, 4, 8, 9, 102, 103, 104, 108, 109) eine erste Breitseite (5) bildet, durch welche der Mischraum in zwei Teilbereiche unterteilbar ist.

4. Statischer Mischer nach einem der Ansprüche 2 oder 3, wobei das Wandelement (1) eine im wesentlichen rechteckige Form aufweist und eine der ersten Breitseite (5) gegenüberliegende zweite Breitseite (6) relativ zur ersten Breitseite (5) um einen Winkel verdreht ist, sodass eine spiralförmige Struktur ausgebildet ist.

5. Statischer Mischer nach Anspruch 4, wobei das Wandelement (2) ein Stegelement (26) umfasst, dessen erste Breitseite (5) eine strömungsteilende Kante ausbildet, welches eine zweite Breitseite (6) umfasst, die an ein Umlenkelement (27) angrenzt, welches zur Umlenkung der Strömung von einem ersten Teilbereich des Mischraums (20) in einen zweiten Teilbereich des Mischraums (20) dient.

6. Statischer Mischer nach Anspruch 5, wobei die von der ersten und zweiten Breitseite (5,6), sowie von Längsseiten (25,35) begrenzte Oberfläche des Wandelements im wesentlichen in Richtung der Längsachse ausgerichtet ist

7. Statischer Mischer nach Anspruch 6, wobei die Oberfläche des Umlenkelements in einer Querebene liegt, die in einem Winkel von 45° bis zu 90° zur Längsachse ausgerichtet ist,

8. Statischer Mischer nach Anspruch 6, wobei die Oberfläche des Umlenkelements in einer Querebene liegt, die in einem Winkel von von 60°bis zu 90° zur Längsachse ausgerichtet ist.

9. Statischer Mischer nach Anspruch 6, wobei die Oberfläche des Umlenkelements in einer Querebene liegt, die in einem Winkel von von von 75° bis zu 90° zur Längsachse ausgerichtet ist.

## Claims

1. A static mixer comprising a plurality of installation bodies (1, 101) which are arranged behind one another along a longitudinal axis of the static mixer, wherein each installation body (1, 101) is configured for installation into a tubular mixer housing; and wherein each installation body (1, 101) has a longitudinal dimension (24), a diameter (36) and a wall thickness (7), **characterized in that** the ratio of longitudinal dimension (24) to diameter amounts to at least 1, with the ratio of longitudinal dimension (24) to wall thickness (7) amounting to at least 10, with the installation body (1, 101) at least partly comprising foamed plastic, and with a ratio of flow path to the wall thickness of the installation body (1, 101) of at least 10 being present.

2. A static mixer in accordance with claim 1, wherein the installation body (1, 101) has a longitudinal axis (10) which is aligned in the direction of a fluid flowing into the installation body (1, 101) so that a mixing space (20, 120) can be spanned by the installation body (1, 101); wherein the mixing space (20, 120) has a cross-sectional flow area (22, 122) in a plane (21, 121) normal to the longitudinal axis (10) which substantially corresponds to the cross-sectional flow area of the tubular mixer housing; wherein the installation body (1, 101) comprises a wall element (2, 3, 4, 8, 9, 102, 103, 104, 108, 109) for the division and/or deflection of the fluid flow in a direction deviating from the longitudinal axis; and wherein a cross-sectional area (23, 123) can be produced by an intersection of the wall element (2, 3, 4, 8, 9, 102, 103, 104, 108, 109) with the plane (21, 121) and this cross-sectional area (23, 123) amounts to a maximum of 1/5 of the cross-sectional flow area (22, 122) of the mixing space (20, 120).

3. A static mixer in accordance with claim 2, wherein the cross-sectional area (23, 123) of the wall element (2, 3, 4, 8, 9, 102, 103, 104, 108, 109) forms a first broad side (5) by which the mixing space can be divided into two part regions.

4. A static mixer in accordance with one of the claims 2 or 3, wherein the wall element (1) has a substantially rectangular shape and a second broad side (6) disposed opposite the first broad side (5) is rotated by an angle relative to the first broad side (5) so that a spiral structure is formed.

5. A static mixer in accordance with claim 4, wherein the wall element (2) comprises a bar element (26) whose first broad side (5) forms a flow-dividing edge, said bar element (26) comprising a second broad side (6) which is adjacent to a deflection element (27) which serves for the deflection of the flow from a first part region of the mixing space (20) into a second part region of the mixing space (20).

6. A static mixer in accordance with claim 5, wherein the surface of the wall element bounded by the first and second broad sides (5, 6) as well as by longitudinal sides (25, 35) is aligned substantially in the direction of the longitudinal axis.

7. A static mixer in accordance with claim 6, wherein the surface of the deflection element is disposed in a transverse plane which is aligned at an angle of 45° up to 90° to the longitudinal axis.

8. A static mixer in accordance with claim 6, wherein the surface of the deflection element is disposed in a transverse plane which is aligned at an angle of 60° up to 90° to the longitudinal axis.

9. A static mixer in accordance with claim 6, wherein the surface of the deflection element is disposed in a transverse plane which is aligned at an angle of 75° up to 90° to the longitudinal axis.

## Revendications

1. Mélangeur statique comportant une pluralité de corps intégrés (1, 101) qui sont disposés les uns derrière les autres le long d'un axe longitudinal du mélangeur statique, chaque corps intégré (1, 101) étant réalisé pour être intégré dans un boîtier de mélangeur tubulaire, chaque corps intégré (1, 101) présentant une dimension en longueur (24), un diamètre (36) et une épaisseur de cloison (7),
**caractérisé en ce que**
le rapport de la dimension en longueur (24) sur le diamètre est au moins de 1, le rapport de la dimension en longueur (24) sur l'épaisseur de cloison (7) est au moins de 10, le corps intégré (1, 101) est constitué au moins partiellement en matière plastique moussée, et un rapport du trajet d'écoulement sur l'épaisseur de cloison du corps intégré (1, 101) est au moins de 10.

2. Mélangeur statique selon la revendication 1,
dans lequel
le corps intégré (1, 101) présente un axe longitudinal (10) qui est orienté en direction d'un fluide entrant dans le corps intégré (1, 101), de sorte que le corps intégré (1, 101) permet de définir une chambre de mélange (20, 120), la chambre de mélange (20, 120) présente une surface de section transversale d'écoulement (22, 122) dans un plan (21, 121) normal à l'axe longitudinal (10), qui correspond au moins sensiblement à la surface de section transversale d'écoulement du boîtier de mélangeur tubulaire,
le corps intégré (1, 101) comprend un élément formant cloison (2, 3, 4, 8, 9, 102, 103, 104, 108, 109) pour subdiviser et/ou dévier l'écoulement de fluide vers une direction qui s'écarte de l'axe longitudinal,
une coupe de l'élément formant cloison (2, 3, 4, 8, 9, 102, 103, 104, 108, 109) avec le plan (21, 121) permet d'engendrer une surface de section transversale (23, 123), et
cette surface de section transversale (23, 123) correspond au maximum à 1/5 de la surface de section transversale d'écoulement (22, 122) de la chambre de mélange (20, 120).

3. Mélangeur statique selon la revendication 2,
dans lequel
la surface de section transversale (23, 123) de l'élément formant cloison (2, 3, 4, 8, 9, 102, 103, 104, 108, 109) constitue une première face large (5) permettant de subdiviser la chambre de mélange en deux zones partielles.

4. Mélangeur statique selon l'une des revendications 2 ou 3,
dans lequel
l'élément formant cloison (1) présente une forme sensiblement rectangulaire, et une seconde face large (6) opposée à la première face large (5) est tournée d'un angle par rapport à la première face large (5), de manière à réaliser une structure de forme spiralée.

5. Mélangeur statique selon la revendication 4,
dans lequel
l'élément formant cloison (2) comprend un élément formant âme (26) dont la première face large (5) constitue une arête de division d'écoulement qui comprend une seconde face large (6) adjacente à un élément de renvoi (27) qui sert à renvoyer le flux depuis une première zone partielle de la chambre de mélange (20) jusque dans une seconde zone partielle de la chambre de mélange (20).

6. Mélangeur statique selon la revendication 5,
dans lequel
la surface de l'élément formant cloison, délimitée par les première et seconde faces larges (5, 6) ainsi que par des faces longitudinales (25, 35) est orientée sensiblement en direction de l'axe longitudinal.

7. Mélangeur statique selon la revendication 6,
dans lequel
la surface de l'élément de renvoi se situe dans un plan transversal qui est orienté selon un angle de 45° à 90° par rapport à l'axe longitudinal.

8. Mélangeur statique selon la revendication 6,
dans lequel
la surface de l'élément de renvoi se situe dans un plan transversal qui est orienté selon un angle de 60° à 90° par rapport à l'axe longitudinal.

9. Mélangeur statique selon la revendication 6,
dans lequel
la surface de l'élément de renvoi se situe dans un plan transversal qui est orienté selon un angle de 75° à 90° par rapport à l'axe longitudinal.
